# EUROPEAN PATENT SPECIFICATION

(11) **EP 1 930 690 B1**
(45) Date of publication and mention of the grant of the patent: **15.04.2009**
(21) Application number: 06025364.8
(22) Date of filing: 07.12.2006
(51) Int. Cl.: G01C 9/00, G01P 15/16, B60W 40/06

(54) **Method and device for dynamically determining a slope of a road**
Verfahren und Vorrichtung zur dynamischen Bestimmung der Straßenneigung
Procédé et dispositif de détermination dynamique de la pente routière

(43) Date of publication of application: 11.06.2008
(73) Proprietor: Continental Automotive GmbH, 30165 Hannover (DE)
(72) Inventor: van der Molen, Henk, 5223 ZX's-Hertogenbosch (NL)

(56) References cited:
- EP-A1- 0 901 929
- WO-A-03/040652
- DE-A1- 3 933 652
- FR-A1- 2 857 925

## Description

The invention relates to a method and a device for dynamically determining a slope of a road. The slope of the road is determined dependent on the gravity which affects a vehicle.

For various applications in a modern vehicle, in particular in a motor vehicle, it is beneficial to know a slope of a road where the motor vehicle is driving. These applications comprise for example a navigation system and/or an advanced driver assistance system. Slopes of roads are usually rather small. For determining the slope properly, an accuracy of approximately 1 % slope is required. This is equivalent to an angle of about 0.6 degrees to a horizontal.

There are various possibilities known to determine the slope of the road on which the motor vehicle is driving. For example a digital road map and/or a data base may contain slope information. Further, a gyroscope and/or a tilt sensor may contribute to determine the pitch of the motor vehicle which may contribute to determine the slope of the road. Further, the slope of the road may be determined dependent on an absolute change of an altitude in which the motor vehicle drives on the road. Such altitude information may be gained by an ambient air pressure and/or by GPS, in particular, by a Doppler shift of the GPS-Signal.

FR 2 857 925 A1 discloses a method for determining a slope of a road in line with the preamble of claim 1. A total longitudinal acceleration of a vehicle is measured. A further acceleration is determined which is caused by a change of speed of the vehicle. The further acceleration is subtracted from the total acceleration. Dependent on the result the slope of the road is measured.

EP 0 901 929 A1 discloses a vehicle maneuvering control device. A curve of a road is detected to calculate curve data including a distance between a vehicle and the curve. An allowable deceleration is set at which the vehicle can travel in accordance with conditions of the road. An allowable lateral acceleration is set at which the vehicle can travel in accordance with the conditions of the road. An allowable approaching speed is set at which the vehicle can approach the curve based on the physical quantity and the lateral acceleration. A deceleration judging speed is calculated for judging whether a present speed at which the vehicle is traveling should be decreased based on the distance, the allowable deceleration and the allowable approaching speed. Then, the present speed is decreased when it is higher than the deceleration judging speed.

The object of the present invention is to create a method and a device for determining a slope of a road which enables a dynamic and precise determining of the slope very precisely over a long time in an easy way.

The object of the invention is achieved by the subject matters of independent claims 1 and 5. Advantageous embodiments are given in the sub claims.

The invention is distinguished by a method and a device for dynamically determining a slope of a road. For dynamically determining the slope of the road a total acceleration which affects a vehicle on the road in longitudinal direction of the vehicle is measured. A first component of the total acceleration of the vehicle which is caused by a change of a speed of the vehicle is determined. A second component of the total acceleration of the vehicle which is caused by the gravity affecting the vehicle in longitudinal direction of the vehicle is determined. The second component is determined dependent on the total acceleration and dependent on the first component of the total acceleration. The slope of the road is determined dependent on the second component of the total acceleration. A sensor for determining the total acceleration of the vehicle is calibrated dependent on GPS information and/or dependent on a digitalized road map and/or a database which contains the slope of the road and/or dependent on an ambient air pressure.

This enables to determine the slope of the road while the vehicle is driving on the road in a very easy and precise way. So, this enables a dynamic and precise determination of the slope of the road in an easy way. In other words: the slope is dynamically determined. The knowledge of the slope of the road may contribute to increase the safety for the vehicle, in particular for a motor vehicle on the road and/or may help the driver of the motor vehicle to navigate with the motor vehicle. The calibration of the sensor for determining the total acceleration of the vehicle contributes to determine the slope of the road very precisely over a long time.

In an advantageous embodiment of the invention the second component of the total acceleration is determined by subtracting the first component of the total acceleration from the total acceleration. This enables to determine the second component of the total acceleration in a very simple way.

In a further advantageous embodiment of the invention the slope is determined by dividing a norm of the second component through a gravitational constant and by determining the arcsine of that division. This enables to determine the slope of the road in a very simple way.

In a further advantageous embodiment of the invention a change of a speed of at least one wheel of the vehicle is determined and the first component of the total acceleration is determined dependent on the determined change of speed of the wheel. This contributes to determine the first component of the total acceleration of the vehicle in a very easy way.

The advantageous embodiments of the method may be transferred to advantageous embodiments of the device without any limitations. Further, the device at least comprises an acceleration sensor for measuring the total acceleration, a sensor for measuring at least one parameter which enables to determine the first component of the total acceleration, and at least one processor for determining the second component of the total acceleration and for determining the slope of the road.

The invention is explained in the following with the aid of schematic drawings.

These are as follows:
- figure 1: a motor vehicle on a road with a slope,
- figure 2: functions for determining the slope of the road,
- figure 3: a float chart of a program for determining the slope of the road,
- figure 4: a device for determining the slope of the road.

Elements of the same design or function that appear in the different illustrations are identified by the same reference characters.

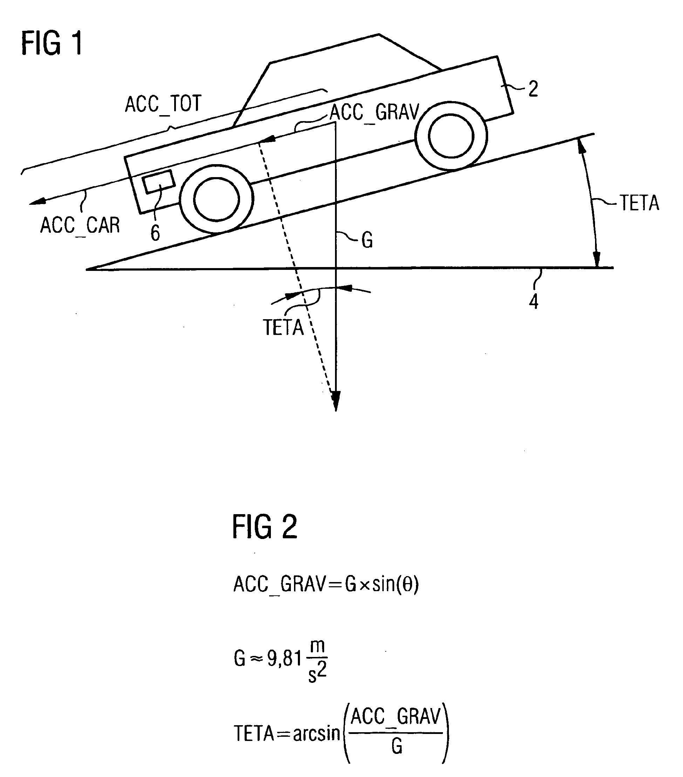

A vehicle, preferably a motor vehicle 2 (figure 1) drives on a road which comprises a slope TETA. For example, the motor vehicle 2 drives in direction down the road. A force which affects the motor vehicle in longitudinal direction of the motor vehicle may be given by a mass of the motor vehicle 2 times a total acceleration ACC_TOT.

A first component ACC_VEH of the total acceleration ACC_TOT may be caused by a change of the speed of the motor vehicle 2. For example, the speed of the motor vehicle 2 may be determined dependent on a speed of at least one wheel of the motor vehicle 2. The first component ACC_VEH of the total acceleration ACC_TOT is determined dependent on the change of the speed of the motor vehicle 2, for example by differentiating the speed of the motor vehicle 2.

A second component ACC_GRAV of the total acceleration ACC_TOT may be caused by gravity. Gravity affects the motor vehicle 2 with the gravitational acceleration G perpendicular to a horizontal 4. Because the road comprises the slope TETA a component of the gravity affects the motor vehicle 2 in longitudinal direction of the motor vehicle 2. This component of gravity represents the second component ACC_GRAV of the total acceleration ACC_TOT.

If the total acceleration ACC_TOT and the first component ACC_VEH of the total acceleration ACC_TOT are known, the slope TETA of the road may be dynamically determined according to the functions in Figure 2.

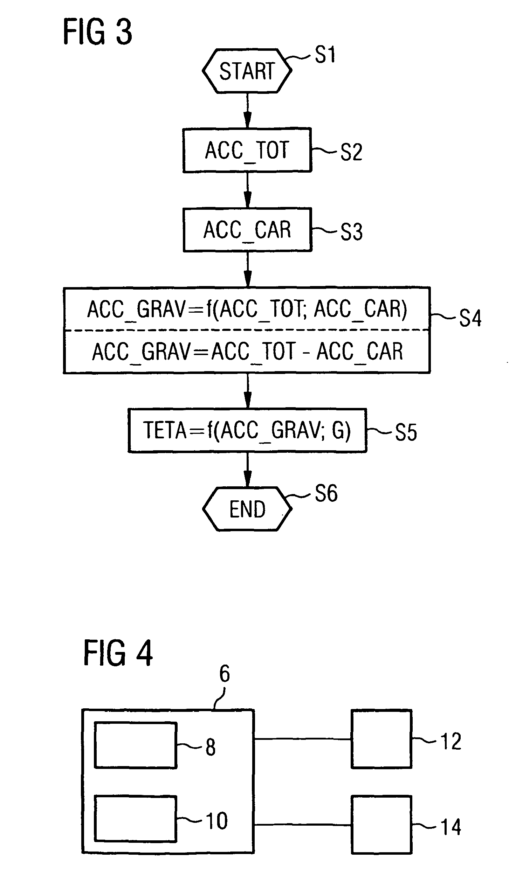

Preferably, a device 6 for dynamically determining the slope TETA of the road is arranged in the motor vehicle 2 (figur 4). The device 6 for dynamically determining the slope TETA of the road may be an independent device 6 or may be integrated into another device of the motor vehicle 2. If the device 6 for dynamically determining the slope TETA of the road is independent, the device 6 for dynamically determining the slope TETA of the road preferably comprises a central processing unit 8 and a memory 10. Further, the device 6 for dynamically determining the slope TETA may be electrically coupled to an acceleration sensor 12 which enables to measure the total acceleration ACC_TOT of the motor vehicle 2, for example an accelerometer. Further, the device 6 for dynamically determining the slope TETA may be electrically coupled to a sensor which enables to determine the speed of the motor vehicle 2. Preferably, the sensor for determining the speed of the motor vehicle is a wheel speed sensor 14. If the device 6 for dynamically determining the slope TETA is integrated into the other device, it may use a memory and/or a central processing unit of the other device. Further, the speed of the motor vehicle 2 and, in particular, the speed of the wheels of the motor vehicle 2 may be provided by a further device of the motor vehicle 2, for example by an ABS-Device.

Preferably, the acceleration sensor 12 is arranged in such a way that a sensitive axis of the acceleration sensor 12 is parallel to the longitudinal axis of the motor vehicle 12. Alternatively, the acceleration sensor 12 may be arranged in such a way that the sensitive axis of the acceleration sensor 12 is between the longitudinal axis of the motor vehicle 2 and the vertical axis of the motor vehicle 2. In any case, the orientation of the sensitive axis of the acceleration sensor 12 has to be considered when dynamically determining the slope of the road. Another possibility may be to use an accelerometer with two or three sensitive axes. This would increase the accuracy of determining the slope and would enable to mount the device in any position. However, the position of the acceleration sensor 12 with two or more sensitive axes also has to be considered by determining the slope of the road.

A program (figure 3) for dynamically determining the slope TETA of the road is preferably stored on the memory 10 of the device 6 for dynamically determining the slope TETA. The program for dynamically determining the slope TETA is started in a step S1 in which, in case, variables are initialized.

In a step S2 the total acceleration ACC_TOT is determined. Preferably, the total acceleration ACC_TOT is determined by the accelerometer. Preferably, a sensitive axis of the accelerometer is parallel to the longitudinal axis of the motor vehicle 2. Alternatively, the sensitive axis of the accelerometer may include a given angle with the longitudinal axis of the motor vehicle 2. However, that angle has to be considered when determining the slope TETA of the road.

In a step S3 the first component ACC_VEH of the total acceleration ACC_TOT is determined. Preferably, the first component ACC_VEH of the total acceleration ACC_TOT is determined by determining the speed of the motor vehicle 2 and by differentiating the speed of the motor vehicle 2.

In a step S4 the second component ACC_GRAV of the total acceleration ACC_TOT is determined dependent on the total acceleration ACC_TOT and dependent on the first component ACC_VEH of the total acceleration ACC_TOT. Preferably, the second component ACC_GRAV of the total acceleration ACC_TOT is determined according to the function of the step S4.

In a step S5 the slope TETA of the road is determined dependent on the second component ACC_GRAV of the total acceleration ACC_TOT and dependent on the gravitational constant G. Preferably, the slope TETA of the road is determined according to the functions of Figure 2.

In a step S6 the program for dynamically determining the slope TETA of the road may be finished. Preferably, the program for dynamically determining the slope TETA of the road is carried out regularly during the use of the motor vehicle 2.

The program for dynamically determining the slope TETA of the road enables a dynamic determination of the slope TETA of the road in a very precise way. Dynamic means in this context that the slope TETA of the road may be determined while the motor vehicle 2 is driving and while the motor vehicle 2 changes its speed.

In order to determine the slope TETA very precisely over a long time, it is advantageous to calibrate the device 6 for determining the slope TETA regularly. For this reason, the slope TETA is determined differently, the results are compared, and the device 6 for determining the slope TETA is calibrated according to that comparison. The slope TETA may be determined differently by using a digital road map with slope information and/or a database, by using altitude information, in particular, information about the change of the altitude of the motor vehicle 2, by using a gyroscope and/or a tilt sensor. The altitude information may be gained by an ambient air pressure and/or by GPS.

The invention is not restricted on the explained embodiment. For example, the motor vehicle 2 may be a different vehicle, for example a lorry or a bicycle. Further, the program for determining the slope TETA of the road maybe implemented in a further program.

### Reference numerals:

- 2: vehicle
- 4: horizontal
- 6: device
- 8: central processing unit
- 10: memory
- 12: acceleration sensor
- 14: wheel speed sensor

- TETA: slope
- G: gravitational constant
- ACC_TOT: total acceleration
- ACC_GRAV: second component
- ACC_VEH: first component
- START: Start
- END: End
- S1 - S6: steps one to six

## Claims

1. Method for dynamically determining a slope (TETA) of a road comprising the steps of:
- measuring a total acceleration (ACC_TOT) which affects a vehicle on the road in longitudinal direction of the vehicle,
- determining a first component (ACC_VEH) of the total acceleration (ACC_TOT) of the vehicle which is caused by a change of a speed of the vehicle,
- determining a second component (ACC_GRAV) of the total acceleration (ACC_TOT) of the vehicle which is caused by the gravity affecting the vehicle in longitudinal direction of the vehicle dependent on the total acceleration (ACC_TOT) and dependent on the first component (ACC_VEH) of the total acceleration (ACC_TOT),
- determining the slope (TETA) of the road dependent on the second component (ACC_GRAV) of the total acceleration (ACC_TOT),
- **characterized by** calibrating a sensor for determining the total acceleration (ACC_TOT) of the vehicle dependent on GPS-Information and/or dependent on a digitalized road map which contains the slope (TETA) of the road and/or dependent on an ambient air pressure.

2. Method in accordance with claim 1 with the second component (ACC_GRAV) of the total acceleration (ACC_TOT) being determined by subtracting the first component (ACC_VEH) of the total acceleration (ACC_TOT) from the total acceleration (ACC_TOT).

3. Method in accordance with one of the preceding claims with the slope (TETA) being determined by dividing a norm of the second component (ACC_GRAV) through a gravitational constant (G) and by determining the arc sine of that division.

4. Method in accordance with one of the preceding claims comprising the steps of determining a change of a speed of at least one wheel of the vehicle and of determining the first component (ACC_VEH) of the total acceleration dependent (ACC_TOT) on the determined change of the speed of the wheel.

5. Device for dynamically determining a slope (TETA) of a road which is arranged for:
- measuring a total acceleration (ACC_TOT) which affects a vehicle on the road in longitudinal direction of the vehicle,
- determining a first component (ACC_VEH) of the total acceleration (ACC_TOT) of the vehicle which is caused by a change of a speed of the vehicle,
- determining a second component (ACC_GRAV) of the total acceleration (ACC_TOT) of the vehicle which is caused by the gravity affecting the vehicle in longitudinal direction of the vehicle dependent on the total acceleration (ACC_TOT) and dependent on the first component (ACC_VEH) of the total acceleration (ACC_TOT),
- determining the slope (TETA) of the road dependent on the second component (ACC_GRAV) of the total acceleration (ACC_TOT),
**characterized by** the device being arranged for calibrating a sensor for determining the total acceleration (ACC_TOT) of the vehicle dependent on GPS-Information and/or dependent on a digitalized road map which contains the slope (TETA) of the road and/or dependent on an ambient air pressure.

## Patentansprüche

1. Verfahren zum dynamischen Bestimmen einer Neigung (TETA) einer Straße, mit den folgenden Schritten:
- Messen einer Gesamtbeschleunigung (ACC_TOT), die sich auf ein Fahrzeug auf der Straße in Longitudinalrichtung des Fahrzeugs auswirkt,
- Bestimmen einer ersten Komponente (ACC_VEH) der Gesamtbeschleunigung (ACC_TOT) des Fahrzeugs, die durch eine Änderung einer Geschwindigkeit des Fahrzeugs verursacht wird,
- Bestimmen einer zweiten Komponente (ACC_GRAV) der Gesamtbeschleunigung (ACC_TOT) des Fahrzeugs, die durch die sich in Longitudinalrichtung des Fahrzeugs auf das Fahrzeug auswirkende Schwerkraft verursacht wird, abhängig von der Gesamtbeschleunigung (ACC_TOT) und abhängig von der ersten Komponente (ACC_VEH) der Gesamtbeschleunigung (ACC_TOT),
- Bestimmen der Neigung (TETA) einer Straße abhängig von der zweiten Komponente (ACC_GRAV) der Gesamtbeschleunigung (ACC_TOT),
- **gekennzeichnet durch** Kalibrieren eines Sensors zum Bestimmen der Gesamtbeschleunigung (ACC_TOT) des Fahrzeugs abhängig von GPS-Informationen und/oder abhängig von einer digitalisierten Straßenkarte, die die Neigung (TETA) der Straße enthält, und/oder abhängig von einem Umgebungsluftdruck.

2. Verfahren nach Anspruch 1, wobei die zweite Komponente (ACC_GRAV) der Gesamtbeschleunigung (ACC_TOT) durch Subtrahieren der ersten Komponente (ACC_VEH) der Gesamtbeschleunigung (ACC_TOT) von der Gesamtbeschleunigung (ACC_TOT) bestimmt wird.

3. Verfahren nach einem der vorhergehenden Ansprüche, wobei die Neigung (TETA) durch Dividieren einer Norm der zweiten Komponente (ACC_GRAV) durch eine Gravitationskonstante (G) und durch Bestimmen des Arcussinus dieser Division bestimmt wird.

4. Verfahren nach einem der vorhergehenden Ansprüche, mit den folgenden Schritten: Bestimmen einer Änderung einer Drehzahl mindestens eines Rads des Fahrzeugs und Bestimmen der ersten Komponente (ACC_VEH) der Gesamtbeschleunigung (ACC_TOT) abhängig von der bestimmten Änderung der Drehzahl des Rads.

5. Einrichtung zum dynamischen Bestimmen einer Neigung (TETA) einer Straße, die für Folgendes ausgelegt ist:
- Messen einer Gesamtbeschleunigung (ACC_TOT), die sich auf ein Fahrzeug auf der Straße in Longitudinalrichtung des Fahrzeugs auswirkt,
- Bestimmen einer ersten Komponente (ACC_VEH) der Gesamtbeschleunigung (ACC_TOT) des Fahrzeugs, die durch eine Änderung einer Geschwindigkeit des Fahrzeugs verursacht wird,
- Bestimmen einer zweiten Komponente (ACC_GRAV) der Gesamtbeschleunigung (ACC_TOT) des Fahrzeugs, die durch die sich in Longitudinalrichtung des Fahrzeugs auf das Fahrzeug auswirkende Schwerkraft verursacht wird, abhängig von der Gesamtbeschleunigung (ACC_TOT) und abhängig von der ersten Komponente (ACC_VEH) der Gesamtbeschleunigung (ACC_TOT),
- Bestimmen der Neigung (TETA) einer Straße abhängig von der zweiten Komponente (ACC_GRAV) der Gesamtbeschleunigung (ACC_TOT),
- **dadurch gekennzeichnet, dass** die Einrichtung für folgendes ausgelegt ist: Kalibrieren eines Sensors zum Bestimmen der Gesamtbeschleunigung (ACC_TOT) des Fahrzeugs abhängig von GPS-Informationen und/oder abhängig von einer digitalisierten Straßenkarte, die die Neigung (TETA) der Straße enthält, und/oder abhängig von einem Umgebungsluftdruck.

## Revendications

1. Procédé pour déterminer dynamiquement une pente (TETA) d'une route comprenant les étapes de :
- mesure d'une accélération totale (ACC_TOT) qui affecte un véhicule sur la route dans la direction longitudinale du véhicule,
- détermination d'une première composante (ACC_VEH) de l'accélération totale (ACC_TOT) du véhicule qui est causée par un changement d'une vitesse du véhicule,
- détermination d'une deuxième composante (ACC_GRAV) de l'accélération totale (ACC_TOT) du véhicule qui est causée par la gravité affectant le véhicule dans la direction longitudinale du véhicule en fonction de l'accélération totale (ACC_TOT) et en fonction de la première composante (ACC_VEH) de l'accélération totale (ACC_TOT),
- détermination de la pente (TETA) de la route en fonction de la deuxième composante (ACC_GRAV) de l'accélération totale (ACC_TOT),
- **caractérisé par** l'étalonnage d'un capteur pour déterminer l'accélération totale (ACC_TOT) du véhicule en fonction d'une information GPS et/ou en fonction d'une carte routière numérisée qui contient la pente (TETA) de la route et/ou en fonction d'une pression d'air ambiant.

2. Procédé selon la revendication 1 avec la deuxième composante (ACC_GRAV) de l'accélération totale (ACC_TOT) étant déterminée en soustrayant la première composante (ACC_VEH) de l'accélération totale (ACC_TOT) de l'accélération totale (ACC_TOT).

3. Procédé selon l'une des revendications précédentes avec la pente (TETA) étant déterminée en divisant une norme de la deuxième composante (ACC_GRAV) à travers une constante gravitationnelle (G) et en déterminant le sinus inverse de cette division.

4. Procédé selon l'une des revendications précédentes comprenant les étapes de détermination d'un changement d'une vitesse d'au moins une roue du véhicule et de détermination de la première composante (ACC_VEH) de l'accélération totale (ACC_TOT) en fonction du changement déterminé de la vitesse de la roue.

5. Dispositif pour déterminer dynamiquement une pente (TETA) d'une route qui est agencé pour :
- mesurer une accélération totale (ACC_TOT) qui affecte un véhicule sur la route dans la direction longitudinale du véhicule,
- déterminer une première composante (ACC_VEH) de l'accélération totale (ACC_TOT) du véhicule qui est causée par un changement d'une vitesse du véhicule,
- déterminer une deuxième composante (ACC_GRAV) de l'accélération totale (ACC_TOT) du véhicule qui est causée par la gravité affectant le véhicule dans la direction longitudinale du véhicule en fonction de l'accélération totale (ACC_TOT) et en fonction de la première composante (ACC_VEH) de l'accélération totale (ACC_TOT),
- déterminer la pente (TETA) de la route en fonction de la deuxième composante (ACC_GRAV) de l'accélération totale (ACC_TOT),
- **caractérisé par** le dispositif étant agencé pour étalonner un capteur pour déterminer l'accélération totale (ACC_TOT) du véhicule en fonction d'une information GPS et/ou en fonction d'une carte routière numérisée qui contient la pente (TETA) de la route et/ou en fonction d'une pression d'air ambiant.
